# EUROPEAN PATENT APPLICATION

(11) **EP 4 756 615 A1**
(43) Date of publication of application: **10.06.2026**
(21) Application number: 24217963.8
(22) Date of filing: 06.12.2024
(51) Int. Cl.: G06F 9/50, G06T 15/00

(54) **SYSTEM AND COMPUTER-IMPLEMENTED METHOD FOR RENDERING OF A COMPUTER MODEL**

(71) Applicant: Siemens Aktiengesellschaft, 80333 München (DE)
(72) Inventor: Singh, Saurabh Narayan, 81739 München (DE)
(74) Representative: Siemens Patent Attorneys

(57) **Abstract**

System for rendering of a computer model, wherein model metadata are assigned to the computer model,
the system comprising:
- a plurality of devices, comprising heterogenous computing capabilities that are configured for rendering at least a part of the computer model,
- a first processing unit that is configured
- to split the computer model into a plurality of model parts depending on the model metadata,
- and to send the respective model parts individually to different selected devices for rendering the respective model parts individually,
and
- a second processing unit that is configured
- to retrieve the respective rendered model parts from the devices,
- and to assemble the rendering of the computer model from the respective rendered model parts.

## Description

The present invention relates to a system and computer-implemented method for rendering a computer model, as well as a computer program product.

The industrial metaverse provides a new way for end users to experience the real world in a digital manner. It allows for example effective collaboration, visualization, and overall immersive experience of industrial settings. For visualizing complex scenes large compute capabilities are required, i.e., large GPUs and/or more power consumption. However, if high compute devices for rendering a complex scene are not available, this creates a problem. It is possible to use cloud-based rendering of a scene and streaming it to the user device and/or visualizing with lower quality.

It is therefore an objective of the present invention to provide a system for rendering a computer model ensuring a given rendering quality and efficiently using computing resources.

The object is solved by the features of the independent claims. The dependent claims contain further developments of the invention.

The invention provides according to the first aspect a system for rendering of a computer model, wherein model metadata are assigned to the computer model, the system comprising:
- a plurality of devices, comprising heterogenous computing capabilities that are configured for rendering at least a part of the computer model,
- a first processing unit that is configured
   - to split the computer model into a plurality of model parts depending on the model metadata,
   - and to send the respective model parts individually to different selected devices for rendering the respective model parts individually,
   and
- a second processing unit that is configured
   - to retrieve the respective rendered model parts from the devices,
   - and to assemble the rendering of the computer model from the respective rendered model parts.

It is an advantage of the present invention that a complex scene according to a complex computer model/computer simulation model can be rendered in a distributed manner using computing devices with heterogeneous computing capabilities, e.g., edge devices or field devices in an industrial environment. Therefore, the invention provides a method and architecture to overcome the dependence of GPUs. It is hence possible to use unutilized compute capacities of various edge devices participating in the system. This can lower the cost of creation of visualization, as well as the dependence on GPUs, making the rendering process more sustainable. To this end, the computer model can be split into smaller parts, depending on model metadata, wherein the parts can then be rendered by these edge devices. In a factory floor or any setup with available compute on edge devices, this methodology creates an efficient rendering as available computing resources on the factory floor can be used. Combining with serverless, this allows for scaling up compute resources when needed.

According to a preferred embodiment of the system, the first processing unit can be configured to select a device for rendering a model part depending on capability, availability, configuration, and/or task assignment of said device.

Therefore, it is possible to optimize the selection of a device for rendering a model part based on available resources.

According to another preferred embodiment, the system can further comprise a third processing unit that is configured to check the quality of a rendered model part and to initiate resending of the respective model part to another device if the quality of the rendered model part is below a given quality value.

It is hence possible to render a respective model part multiple times to ensure a given rendering quality.

According to another preferred embodiment of the system, the model metadata can comprise information about objects of the computer model, wherein the information comprises a location of an object, a rendering complexity value of an object, a rendering priority value of an object, a viewpoint associated with an object, and/or an order in which an object must be rendered.

The computer model is preferably split into model parts with different levels of complexity and/or priority depending on the model metadata. The model metadata can be understood as a scene description of the scene that is to be rendered, comprising detailed information about the scene including all assets and/or model parts.

According to another embodiment of the system, the first processing unit can be configured to resend a model part to a different device if the model part cannot be rendered on the originally selected device.

For example, if a model part or scene is too complex for a device with limited computing capabilities or unavailability of the respective computing resource, the model part can be sent to another device. This allows to compensate for unevenly distributed computing capabilities of the participating devices.

According to another embodiment, the system can further comprise a fourth processing unit that is configured to enhance the quality of the rendering of the computer model based on artificial intelligence.

To this end, an Al-based enhancer can be used to improve the fidelity of the model by adding missing information.

According to another embodiment, the system can further comprise a storage unit that is configured to store a selected rendered model part.

This helps to improve the efficiency of the scene rendering because already rendered parts can be reused.

According to another embodiment, the system can further comprise an interface to a cloud service for rendering at least one model part.

The invention provides according to a second aspect a computer-implemented method for rendering of a computer model, wherein model metadata are assigned to the computer model, the method comprising the steps:
- splitting the computer model into a plurality of model parts depending on the model metadata,
- sending the respective model parts individually to different selected devices for rendering the respective model part individually, wherein the devices comprise heterogenous computing capabilities that are each configured for rendering at least a part of the computer model,
- retrieving the respective rendered model parts from the selected devices,
   and
- assembling the rendering of the computer model from the respective rendered model parts.

In addition, a computer program product (non-transitory computer readable storage medium having instructions, which when executed by a processor, performs actions) having program instructions for performing the aforementioned method according to embodiments of the invention is claimed.

The invention will be explained in more detail by reference to the accompanying figures.
Fig. 1: shows an exemplary embodiment of a system for rendering a computer model; and
Fig. 2: shows an exemplary embodiment of a computer-implemented method for rendering a computer model.

Equivalent parts in the different figures are labeled with the same reference signs.

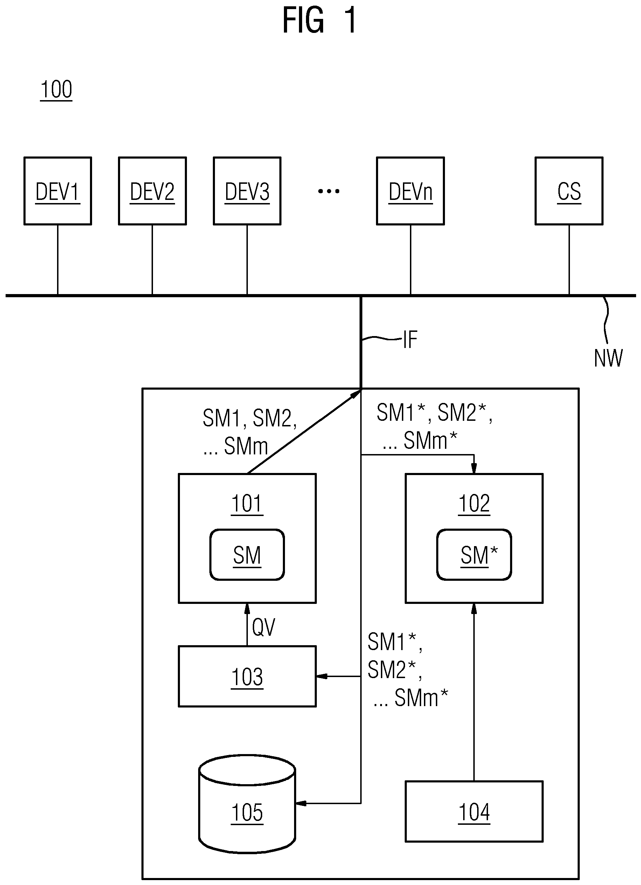

Figure 1 shows an exemplary embodiment of a system 100 for rendering a computer model using computing devices DEV1, DEV2, DEV3, ..., DEVn in an industrial environment. A computer model SM or computer simulation model SM can for example describe the industrial environment or part of it, such as a manufacturing process and/or machine. Preferably, the devices DEV1, DEV2, DEV3, ..., DEVn are part of the industrial environment. The system 100 is configured to create/to render a scene/visualization of the computer model SM.

The system 100 comprises the plurality of edge/field devices DEV1, DEV2, DEV3, ..., DEVn, that are connected via a wired and/or wireless network NW. Each of the devices DEV1, DEV2, DEV3, ..., DEVn comprises a processing unit, wherein the processing capabilities are heterogeneous and that are configured for rendering at least a part of the computer model. Preferably, most of the devices DEV1, DEV2, DEV3, ..., DEVn have an assigned main task that is different than the rendering of the computer model, e.g., task related to manufacturing a product.

The system 100 further comprises a first processing unit 101 that is configured to split the computer model SM into a plurality of model parts SM1, SM2, ..., SMm depending on the model metadata and to send the respective model parts SM1, SM2, ..., SMm individually to different selected devices DEV1, DEV2, ..., DEVn for rendering the respective model parts individually, wherein each device DEV1, DEV2, ..., DEVn is selected depending on capability, availability, configuration, and/or task assignment of said device.

For example, various edge devices DEV1, DEV2, DEV3, ..., DEVn may be available for rendering. The edge devices are preferably registered using a lookup table. The first processing unit 101 can then access this lookup table to identify following information about the edge devices:
- Compute availability of an edge device, i.e., currently available computing resources.
- Overall configuration of an edge device, as for example PLCs with multi core CPUs and GPUs.
- The task currently assigned to a respective device.
- A Boolean value specifying whether the edge device is free or busy: For the next rendering of the asset, this information will be needed to assign models to assets.
- Based on such information, the devices can be selected by the first processing unit 101 for rendering a model part.

The model metadata comprise information about objects of the computer model SM, wherein the information comprises a location of an object, a rendering complexity value of an object, a rendering priority value of an object, a viewpoint associated with an object, and/or an order in which an object must be rendered.

For example, the model metadata can comprise a detailed scene description about the scene to be rendered. Model metadata can therefore comprise information about all assets in the scene. For example, the model metadata can comprise:
- A location of an asset/object, given in appropriate coordinates, e.g., absolute or relative to a user.
- An associated complexity to render rating that depends on the number of sub-assets, complex parts, pre-defined fidelity.
- A priority value of the asset/object, wherein a priority of the asset can be calculated based on a weighted matrix, that can be defined using the following criteria:
   ∘ Depending on past user flows: Whether the user has a lower or higher probability of going near the asset or interacting with it. For example, an object placed under a table that a user might not see or interact with.
   ∘ Depending on goal of an asset: If the end goal is that the user must interact with the asset, then the asset can be classified as high priority. For example, a power button that needs to be pressed during the workflow.
   ∘ Depending on the designer of the scene: Designer can also mark priority to an asset.
   ∘ Additional parameters can be introduced at the time of scene creation for further prioritization.
- Various views of an asset/object that need to be rendered: Every asset can be viewed from multiple angles. For example, if it is an unmovable asset placed next to a wall and user can only look at the front of the asset, then the asset can be marked with "Front view only".
- The order in which each asset must be rendered: Some models need to be rendered before others for continuity. In that case, such information is also part of the metadata for each asset.
- Other metadata can be added here to further classify an asset/object.

The first processing unit 101 is further configured to resend a model part to a different device if the model part cannot be rendered on the originally selected device. In such case, a notification can be retrieved by the first processing unit 101 to trigger resending the model part to another device. For example, if computing resources are not available or sufficient for a specific model part, it can be sent to another device for rendering.

The system 100 further comprises a second processing unit 102 that is configured to retrieve the respective rendered model parts SM1*, SM2*, ... , SMm* from the devices DEV1, DEV2, ..., DEVn, and to assemble the rendering of the computer model SM* from the respective rendered model parts SM1*, SM2*, ..., SMm*. The second processing unit 102 can be for example connected to a user device for displaying the rendered model SM*.

The system 100 further comprises a third processing unit 103 that is configured to check the quality of a rendered model part SM1*, SM2*, ..., SMm* based on a given quality value QV and to initiate resending the respective model part to another device if the quality of the rendered model part is below the given quality value QV. The quality relates for example to resolution of the rendered model part.

The system 100 further comprises a fourth processing unit 104 that is configured to enhance the quality of the rendering of the computer model based on artificial intelligence. Denoising and upscaling of a rendered object is for example performed using techniques like deep learning super sampling. Post denoising, neural filters can be used to enhance details and lighting in the rendered object.

The system 100 further comprises a storage unit 105 that is configured to store a selected rendered model part SM1*, SM2*, ..., SMm*. The second processing unit 102 can for example retrieve stored rendered model parts from the storage unit 105 to assemble the complete rendering of the computer model SM*.

The system 100 further comprises an interface IF to a cloud service CS, preferably with high computing resources, for rendering at least one model part.

A complex model or scene can therefore be rendered on a cluster of resource-constrained devices DEV1, DEV2, ..., DEVn. First, the scene is broken down into models and assets with levels of complexity and priority. Second, these models are separately rendered in parallel on different devices. The fidelity of models is taken care of by either multiple renderings or requesting a new compute device solely for complex model. Additionally, AI based enhancement is used to improve the fidelity of the final model. Third, the models and assets are collected in the end user device and stitched together to create a final rendering of the overall scene.

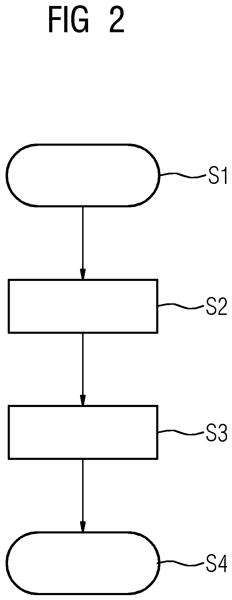

Figure 2 shows an exemplary embodiment of a computer-implemented method for rendering a computer model, wherein model metadata are assigned to the computer model. The method comprises the following method steps:
In a first step S1 the computer model is split into a plurality of model parts depending on the model metadata. To this end, the model metadata are analysed to assign a model part to a selected device in an appropriate order. For example, based on a priority assigned to a model part, the model parts can be queued in order of priority. The model parts can then be matched to selected devices.

In the next step S2, the respective model parts are sent individually to different selected devices for rendering the respective model part individually, wherein the devices comprise heterogenous computing capabilities that are each configured for rendering at least a part of the computer model. Each model part is then rendered on a processing unit of a selected device.

It is possible that a model part is too complex for a device with small computing capacity, or the processing unit is currently not available. Then, the model part can be sent to a different device or to a cloud service for rendering. In case, the rendering quality is below a given quality value, the model part can be resent to a different device for additional rendering.

In the next step S3, the respective rendered model parts are retrieved from the selected devices and/or from storage.

In the next step S4, the rendering of the computer model is assembled from the respective rendered model parts. For example, the rendered model/scene can be assembled and displayed by a user device. In case of a lower fidelity of the rendered scene than expected or requested, an AI based enhancer can be used to enhance the fidelity of the model by adding/extrapolating missing information.

All of the described and/or drawn features as shown by the embodiments can be advantageously combined within the scope of the invention.

Although the present invention has been described in detail with reference to the preferred embodiment, it is to be understood that the present invention is not limited by the disclosed examples, and that numerous additional modifications and variations could be made thereto by a person skilled in the art without departing from the scope of the invention.

## Claims

1. System (100) for rendering of a computer model (SM), wherein model metadata are assigned to the computer model,
the system comprising:
- a plurality of devices (DEV1, DEV2, DEV3, ..., DEVn), comprising heterogenous computing capabilities that are configured for rendering at least a part of the computer model (SM),
- a first processing unit (101) that is configured
- to split the computer model (SM) into a plurality of model parts (SM1, SM2, ..., SMm) depending on the model metadata,
- and to send the respective model parts (SM1, SM2, ..., SMm) individually to different selected devices (DEV1, DEV2, ..., DEVn) for rendering the respective model parts individually,
and
- a second processing unit (102) that is configured
- to retrieve the respective rendered model parts (SM1*, SM2*, ..., SMm*) from the devices,
- and to assemble the rendering of the computer model (SM*) from the respective rendered model parts (SM1*, SM2*, ..., SMm*).

2. System (100) according to claim 1, wherein the first processing unit (101) is configured to select a device for rendering a model part depending on capability, availability, configuration, and/or task assignment of said device.

3. System (100) according to one of the preceding claims, further comprising a third processing unit (103) that is configured to check the quality of a rendered model part and to initiate resending of the respective model part to another device if the quality of the rendered model part is below a given quality value (QV).

4. System (100) according to one of the preceding claims, wherein the model metadata comprise information about objects of the computer model (SM), wherein the information comprises a location of an object, a rendering complexity value of an object, a rendering priority value of an object, a viewpoint associated with an object, and/or an order in which an object must be rendered.

5. System (100) according to one of the preceding claims, wherein the first processing unit (101) is configured to resend a model part to a different device if the model part cannot be rendered on the originally selected device.

6. System (100) according to one of the preceding claims, further comprising a fourth processing unit (104) that is configured to enhance the quality of the rendering of the computer model based on artificial intelligence.

7. System (100) according to one of the preceding claims, further comprising a storage unit (105) that is configured to store a selected rendered model part.

8. System (100) according to one of the preceding claims, further comprising an interface (IF) to a cloud service (CS) for rendering at least one model part.

9. Computer-implemented method for rendering of a computer model, wherein model metadata are assigned to the computer model, the method comprising the steps:
- splitting (S1) the computer model into a plurality of model parts depending on the model metadata,
- sending (S2) the respective model parts individually to different selected devices for rendering the respective model part individually, wherein the devices comprise heterogenous computing capabilities that are each configured for rendering at least a part of the computer model,
- retrieving (S3) the respective rendered model parts from the selected devices,
and
- assembling (S4) the rendering of the computer model from the respective rendered model parts.

10. Computer program product directly loadable into the internal memory of a digital computer, comprising software code portions for performing the method steps of claim 9 when said computer program product is run on the computer.
